(19) Europäisches Patentamt

European Patent Office

Office européen des brevets

(11) EP 0 786 887 A1

(12) DEMANDE DE BREVET EUROPEEN

(43) Date de publication:
30.07.1997 Bulletin 1997/31

(51) Int. Cl.⁶: H04L 25/03

(21) Numéro de dépôt: 96830037.6

(22) Date de dépôt: 29.01.1996

(84) Etats contractants désignés:
AT BE CH DE DK ES FR GB GR IE IT LI LU MC NL PT SE
Etats d'extension désignés:
LT LV SI

(71) Demandeur: ALCATEL ITALIA S.p.A.
I-20158 Milano (IT)

(72) Inventeurs:
• Houplain, Jean-François
  78100 St. Germain en Laye (FR)
• Roux, Pierre
  95100 Argenteuil (FR)
• Marchesani, Rossano
  66100 Chieti (IT)

(74) Mandataire: Pothet, Jean Rémy Emile Ludovic et al
ALCATEL ALSTHOM,
Département de Propriété Industrielle,
30, avenue Kléber
75116 Paris (FR)

(54) Procédé de compensation des différences en temps de propagation de groupe entre les filtres analogiques d'un émetteur ou d'un récepteur de signaux en quadrature de phase

(57) L'invention concerne notamment un procédé de compensation des différences en temps de propagation de groupe entre un premier et un deuxième filtre analogique (5', 5") d'un émetteur de signaux en quadrature, et entre un troisième et un quatrième filtre analogique (10', 10") d'un récepteur de signaux en quadrature.

Le procédé consiste à :

- appliquer les signaux de sortie des premier et deuxième filtres (5', 5") aux troisième et quatrième filtres (10', 10") respectivement afin de mesurer une différence temporelle Δ1 égale à :

$$(Tx + Rx) - (Ty + Ry)$$

avec Tx, Rx, Ty et Ry étant respectivement les temps de propagation de signaux dans le premier, deuxième, troisième et quatrième filtres,
- appliquer les signaux de sortie des premier et deuxième filtres (5', 5") aux quatrième et troisième filtres (10'; 10") respectivement afin de mesurer une différence temporelle Δ2 égale à :

$$(Ty + Rx) - (Tx + Ry)$$

- déterminer, à partir des valeurs Δ1 et Δ2, des coefficients de pondération appliqués à des filtres numériques en série avec ces filtres analogiques (5', 5", 10', 10") pour compenser les différences en temps de propagation de groupe entre le premier et le deuxième et entre le troisième et le quatrième filtre analogique (5', 5", 10', 10") respectivement.

FIG. 2

FIG. 3

## Description

La présente invention concerne de manière générale la transmission de signaux en quadrature de phase et concerne plus particulièrement un procédé de compensation des différences en temps de propagation de groupe entre les filtres analogiques d'un émetteur de signaux en quadrature de phase et entre les filtres analogiques d'un récepteur de signaux en quadrature de phase.

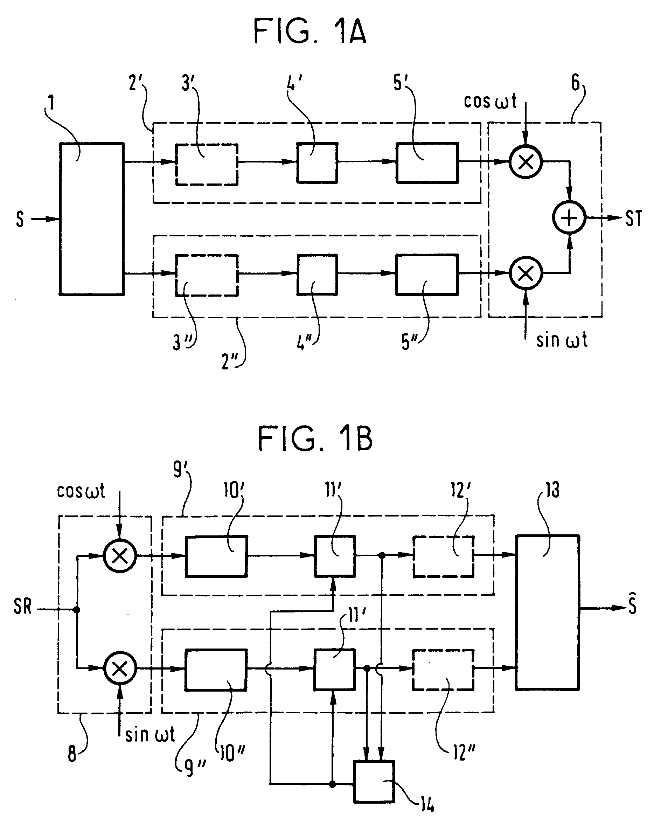

Pour la transmission de signaux en quadrature de type MDP-M (Modulation De Phase à M états), MDAP-M (Modulation D'Amplitude et de Phase à M états), etc. on utilise habituellement un émetteur et un récepteur de signaux modulés en quadrature de phase comme représentés dans les figures 1A et 1B.

L'émetteur, représenté dans la figure 1A, comprend une interface 1 qui, à partir d'un signal à transmettre S, fournit deux signaux numériques en bande de base sur deux voies de traitement 2', 2''. Chaque voie de traitement comprend un filtre numérique 3', 3'', généralement programmable, à la sortie duquel est connecté un convertisseur numérique/analogique 4', 4''. A la sortie de chaque convertisseur numérique/analogique 4', 4'' est connecté un filtre d'émission analogique 5', 5'' de type passe-bas. Les signaux fournis par les voies de traitement 2', 2'' sont mélangés respectivement avec un signal cos $\omega t$ et un signal sin $\omega t$ (avec $\omega = 2\pi f$ et f la fréquence de la porteuse du signal transmis) et additionnés dans un modulateur en quadrature de phase 6.

Le signal de sortie ST du modulateur 6 est transmis par un canal de transmission, par exemple hertzien, à l'attention d'un récepteur représenté à la figure 1B.

Le récepteur comprend un démodulateur en quadrature de phase 8 mélangeant le signal reçu SR avec un signal cos $\omega t$ et un signal sin $\omega t$ pour obtenir deux signaux en bande de base appliqués à deux voies de traitement 9', 9''. Chaque voie de traitement comprend un filtre de réception analogique 10', 10'' de type passe-bas à la sortie duquel est connecté un convertisseur analogique/numérique 11', 11'', auquel est connecté un filtre numérique 12', 12'', généralement programmable et éventuellement auto-adaptatif. Dans ce dernier cas, chaque filtre 12', 12'' est commandé par un moyen d'estimation correspondant non représenté. Les signaux obtenus en sortie des voies 9' et 9'' sont appliqués à une unité de traitement 13 fournissant un signal de sortie Ŝ. Les signaux fournis par les convertisseurs analogiques-numériques 11' et 11'' sont également appliqués aux entrées d'un circuit de récupération d'horloge 14 dont le signal de sortie contrôle les instants d'échantillonnage des convertisseurs analogiques-numériques 11' et 11''.

Le problème est que du fait des tolérances des composants constituant les filtres analogiques 5' et 5'' d'une part et 10' et 10'' d'autre part, ces filtres ne sont pas absolument identiques deux à deux (le filtre 5' est différent du filtre 5'' et le filtre 10' est différent du filtre 10''). Il en résulte des temps de propagation de groupe différents dans les voies de traitement 2' et 2'' d'une part et 9' et 9'' d'autre part. Cette différence se traduit par une erreur sur la fermeture du diagramme de l'oeil au niveau des échantillonneurs faisant partie des convertisseurs analogique-numériques 11' et 11''.

Une solution de l'art antérieur pour remédier à ce problème est d'utiliser des filtres 5', 5'' respectivement 10', 10'' appairés, ce qui exige soit des composants à très faible tolérance, soit de prévoir un réglage précis des filtres 5', 5'', 10', 10''. Cependant, des composants à faible tolérance sont chers et un réglage précis est coûteux en temps.

Une autre solution de l'art antérieur est de compenser le décalage avec des égaliseurs au niveau réception. Un égaliseur est constitué d'un filtre adaptatif et d'un moyen d'estimation calculant les coefficients du filtre adaptatif. On peut dans ce cas utiliser les filtres numériques 12' et 12'' en ajoutant des moyens d'estimation. Il faut alors cependant ajouter dans chaque récepteur des moyens d'estimation, afin de commander ces filtres numériques et de disposer de temps de propagation de groupes identiques dans les deux voies de chaque récepteur.

La présente invention a notamment pour objectif de remédier à ces inconvénients.

Plus précisément, un des objectifs de l'invention est de fournir un procédé de compensation des différences en temps de propagation de groupe entre les filtres analogiques d'un émetteur et ceux d'un récepteur de signaux en quadrature de phase, ce procédé ne nécessitant pas l'ajout de composants coûteux, de réglages manuels ou d'ajout d'estimateurs dans chaque récepteur.

A cette fin, la présente invention propose un procédé de compensation des différences en temps de propagation de groupe entre les filtres analogiques d'un émetteur de signaux en quadrature de phase et entre les filtres analogiques d'un récepteur de signaux en quadrature de phase, l'émetteur comprenant un modulateur de signaux en quadrature de phase fournissant un signal de transmission à partir d'un premier et d'un deuxième signal en bande de base issus d'une première et d'une deuxième voie de traitement, les première et deuxième voies de traitement comprenant respectivement un premier et un deuxième filtre d'émission analogique, le récepteur comprenant un démodulateur de signaux en quadrature de phase qui, à partir du signal reçu, fournit un troisième et un quatrième signal en bande de base à respectivement une troisième et à une quatrième voie de traitement, les troisième et quatrième voies de traitement comprenant respectivement un troisième et un quatrième filtre de réception analogique qui fournissent respectivement un troisième signal filtré X et un quatrième signal filtré Y, le récepteur comprenant en outre un circuit de récupération d'horloge fournissant un signal d'horloge à partir des troisième et quatrième signaux filtrés X respectivement Y, ce procédé consistant à :

-a- appliquer le premier et le deuxième signal à respectivement le troisième et quatrième filtre analogique, les signaux de sortie des troisième et quatrième filtres analogiques constituant respectivement des signaux X1 et Y1 appliqués à un moyen d'estimation de la différence temporelle fournissant une différence :

$$\Delta 1 = (Tx + Rx) - (Ty + Ry)$$

avec Tx, Rx, Ty et Ry étant respectivement les temps de propagation de signaux dans le premier, deuxième, troisième et quatrième filtres, la différence $\Delta 1$ étant représentative de la différence temporelle entre les instants de pointage optimaux entre les signaux X1 et Y1,

-b- appliquer le premier et le deuxième signal à respectivement le quatrième et troisième filtre analogique, les signaux de sortie des troisième et quatrième filtres analogiques constituant respectivement des signaux X2 et Y2 appliqués au moyen d'estimation de la différence temporelle fournissant une différence :

$$\Delta 2 = (Ty + Rx) - (Tx + Ry)$$

la différence $\Delta 2$ étant représentative de la différence temporelle entre les instants de pointage optimaux entre les signaux X2 et Y2,

-c- déterminer, à partir des différences $\Delta 1$ et $\Delta 2$, des coefficients de pondération appliqués à des cinquième, sixième, septième et huitième filtres numériques insérés dans les première, deuxième, troisième et quatrième voies de traitement, les filtres numériques étant inopérants pendant les étapes -a- et -b-, de manière à compenser les différences en temps de propagation de groupe d'une part entre les premier et deuxième filtres analogiques et d'autre part entre les troisième et quatrième filtres analogiques.

La présente invention permet ainsi d'utiliser des filtres analogiques comprenant des composants présentant des tolérances importantes car les différences en temps de propagation de groupe entre les filtres analogiques de l'émetteur ainsi que celles entre les filtres analogiques du récepteur sont automatiquement compensées par les filtres numériques.

En calculant les coefficients de pondération appliqués à des filtres numériques à partir des différences temporelles $\Delta 1$ et $\Delta 2$, on peut effectuer un réglage des voies ayant pour objet de compenser leur retard différentiel, de manière comparable à la compensation qu'apporterait un égaliseur. Mais contrairement à la solution utilisant de véritables égaliseurs, la solution de la présente invention ne nécessite ni de moyens d'estimation calculant de manière continue les coefficients de filtres adaptatifs, ni de convertisseurs analogiques/numériques supplémentaires pour convertir les signaux de sortie des filtres analogiques de l'émetteur.

Avantageusement, le débit symbolique du premier et du deuxième signal est le débit symbolique le plus élevé qui peut être supporté par un système de transmission comprenant l'émetteur et le récepteur.

L'invention concerne également un dispositif d'estimation des différences temporelles $\Delta 1$ et $\Delta 2$, ce dispositif consistant en :

- un premier et un deuxième circuit de type Gardner recevant respectivement les troisième et quatrième signaux filtrés X et Y, les circuits de type Gardner servant également de circuit de récupération d'horloge,
- un soustracteur soustrayant le signal fourni par le deuxième circuit de type Gardner du signal fourni par le premier circuit de type Gardner, et
- un intégrateur intégrant le signal fourni par le soustracteur pour produire les différences temporelles $\Delta 1$ et $\Delta 2$.

Avantageusement, les circuits de type Gardner comprennent chacun un premier circuit de retard recevant un signal d'entrée, la sortie du premier circuit de retard étant connectée à l'entrée d'un deuxième circuit de retard, un soustracteur soustrayant le signal entrant dans le premier circuit de retard du signal fourni par le deuxième circuit de retard et un multiplicateur multipliant le signal fourni par le premier circuit de retard par le signal fourni par le soustracteur.

Le soustracteur et l'intégrateur du circuit d'estimation des différences $\Delta 1$ et $\Delta 2$ peuvent être intégrés dans le récepteur, leur coût étant minime.

D'autres caractéristiques et avantages de la présente invention apparaîtront plus clairement à la lecture de la description suivante, en référence aux dessins annexés correspondants, dans lesquels :

- la figure 1 montre un système de transmission de signaux en quadrature de phase ;
- la figure 2 montre une étape -a- du procédé de la présente invention ;
- la figure 3 montre une étape -b- du procédé de la présente invention ;
- la figure 4 montre un circuit de récupération d'horloge auquel est ajouté un circuit d'estimation de différence de temps de propagation de groupe selon la présente invention ;
- la figure 5 montre un filtre à réponse impulsionnelle finie.

Dans toutes ces figures, les éléments identiques portent les mêmes numéros de référence.

La figure 1 a été décrite précédemment en relation avec l'état de la technique.

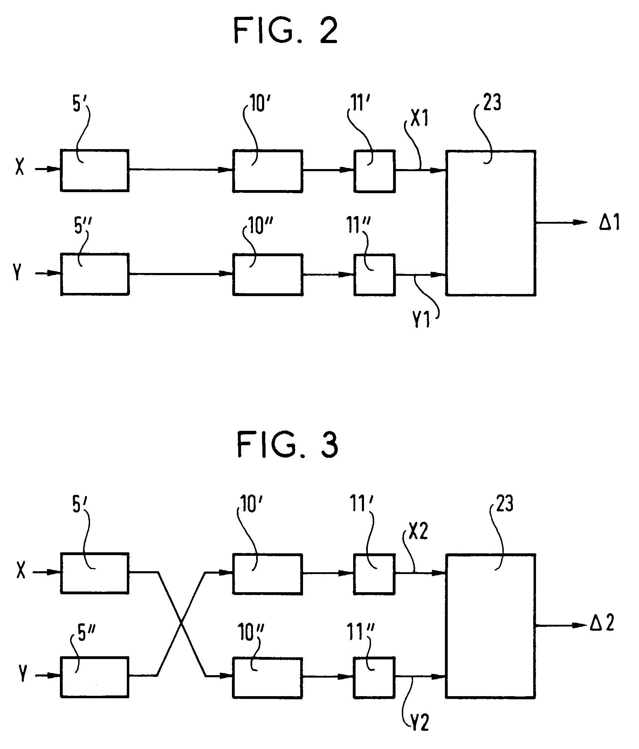

La figure 2 montre l'agencement d'une étape -a- du procédé de la présente invention, dans laquelle le filtre analogique 5' est connecté au filtre analogique 10' et où le filtre analogique 5" est connecté au filtre analogique 10". Des signaux connus sont appliqués à l'entrée du filtre analogique 5' et à l'entrée du filtre analogique 5". Les signaux fournis par les filtres analogiques 10' et 10" sont appliqués aux entrées des convertisseurs analogiques/numériques 11' et 11" qui fournissent des signaux X1 et Y1. Les signaux X1 et Y1 sont décalés l'un par rapport à l'autre d'une différence temporelle $\Delta 1$ égale à :

$$\Delta 1 = (Tx + Rx) - (Ty + Ry)$$

avec Tx, Rx, Ty et Ry étant respectivement les temps de propagation de signaux dans les filtres 5', 5", 10' et 10". Les signaux X1 et Y1 sont appliqués aux entrées d'un estimateur de différence temporelle 14, 23, qui fournit la différence $\Delta 1$. L'estimateur de la différence temporelle 23 réutilise la plus grande partie du circuit de récupération d'horloge 14 et sera décrit par la suite. La différence temporelle $\Delta 1$ est représentative de la différence temporelle entre les instants de pointage optimaux des signaux X1 et Y1.

La figure 3 montre l'agencement d'une étape -b- du procédé de la présente invention, dans laquelle le filtre analogique 5' est connecté au filtre analogique 10" et le filtre analogique 5" est connecté au filtre analogique 10'. Des signaux connus sont appliqués aux entrées des filtres analogiques 5' et 5". Les signaux fournis par les filtres analogiques 10' et 10" sont appliqués aux entrées des convertisseurs analogiques-numériques 11' et 11" qui fournissent des signaux X2 et Y2. Les signaux X2 et Y2 sont décalés l'un par rapport à l'autre d'une différence temporelle $\Delta 2$ égale à :

$$\Delta 2 = (Ty + Rx) - (Tx + Ry)$$

avec Tx, Rx, Ty et Ry étant définis dans la description de la figure 2. Les signaux X2 et Y2 sont appliqués aux entrées de l'estimateur de la différence temporelle 14, 23, qui fournit la différence $\Delta 2$. La différence $\Delta 2$ est représentative de la différence temporelle entre les instants de pointage optimaux des signaux X2 et Y2.

Les mesures de $\Delta 1$ et $\Delta 2$ sont réalisées par connexion directe (physique) des filtres analogiques entre eux.

Les différences de temps de propagation de groupe entre les filtres analogiques 5' et 5" de l'émetteur peuvent être calculées à partir de $\Delta 1$ et $\Delta 2$ de la manière suivante :

$$Tx - Ty = (\Delta 1 - \Delta 2) / 2$$

De même, les différences de temps de propagation de groupe entre les filtres analogiques du récepteur 10' et 10" peuvent être calculées à partir de $\Delta 1$ et $\Delta 2$ de la manière suivante :

$$Rx - Ry = (\Delta 1 + \Delta 2) / 2$$

Le procédé consiste ensuite à calculer les coefficients des filtres numériques 3', 3" afin de compenser cette différence de temps de propagation, à partir de la différence de temps de propagation entre les filtres analogiques 5' et 5". De même, la différence de temps de propagation entre les filtres analogiques du récepteur 10', 10" est utilisée pour obtenir les coefficients des filtres numériques 12', 12", afin de compenser cette différence de temps de propagation. Ces filtres numériques 3', 3", 12', 12" seront décrits plus tard.

Les filtres numériques 3', 3", 12' et 12" sont sans influence vis-à-vis de la valeur du retard différentiel pendant l'estimation de la différence de temps de propagation (étapes -a- et -b-). On peut rendre ces filtres inopérants en appliquant aux filtres 3' et 3" (12' et 12" respectivement) les mêmes coefficients. Ils sont ainsi rendus inopérants vis-à-vis de la valeur du retard différentiel.

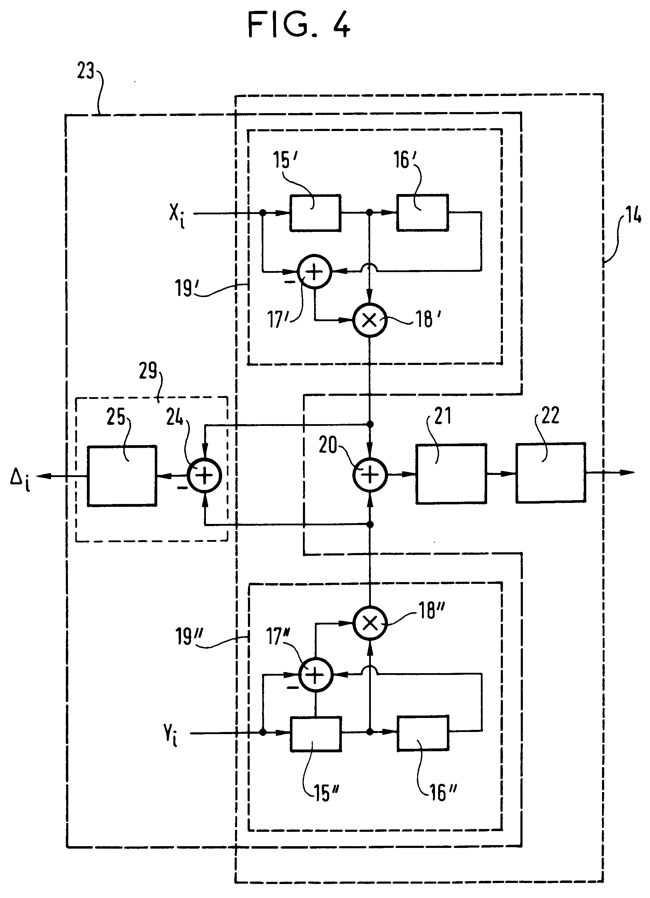

La figure 4 montre un dispositif d'estimation de différence temporelle 23 selon la présente invention, ce dispositif étant construit autour d'un circuit de récupération d'horloge 14 faisant partie d'un récepteur de signaux en quadrature de phase.

Le circuit de récupération d'horloge 14 reçoit les signaux filtrés et numérisés des voies de traitement de signaux en bande de base 9', 9" du récepteur, notamment les signaux Xi, Yi (avec i valant 1 ou 2 selon que la réalisation de la figure 2 ou de la figure 3 est mise en oeuvre) fournis par les convertisseurs analogiques/numériques 11' et 11". Le circuit de récupération d'horloge 14 comprend pour chacun des signaux Xi et Yi un circuit de type Gardner 19', 19".

On pourra se référer à l'article intitulé "A BPSK/QPSK Timing-Error Detector For Sampled Receivers" de Floyd M. Gardner, IEEE Transactions On Communications, vol. COM-34, n°5, mai 1986, pp.423 à 429.

Un circuit de type Gardner consiste par exemple en un premier circuit de retard 15' ou 15" recevant le signal Xi ou Yi, la sortie du premier circuit de retard étant connectée à l'entrée d'un deuxième circuit de retard 16' ou 16". Un soustracteur 17' ou 17" soustrait le signal entrant dans le premier circuit de retard 15' (15") du signal sortant du deuxième circuit de retard 16' (16"). Le retard apporté par chacun des circuits de retard 15', 15", 16' et 16" a une valeur de Ts/2, Ts étant la période symbole. Un multiplicateur 18' (18") multiplie le signal sortant du premier circuit de retard 16' (16") par le signal fourni par le soustracteur 17' (17"). Les signaux fournis par les multiplicateurs 18' et 18" constituent les signaux de sortie des circuits de type Gardner 19', respectivement 19".

Le signal de sortie du circuit de type Gardner 19' est additionné au signal de sortie du circuit de type Gardner 19" dans un additionneur 20. Cette somme est intégrée par un intégrateur 21 qui fournit un signal de contrôle pour un oscillateur commandé en tension 22 produisant le signal d'horloge de récupération de rythme destiné aux convertisseurs analogique-numériques.

Le dispositif d'estimation de différence 23 selon la présente invention utilise les deux circuit "Gardner" du circuit de récupération d'horloge 14 et comprend en outre un module 29 comprenant un soustracteur 24 et un intégrateur 25. Le soustracteur 24 soustrait le signal de sortie du circuit "Gardner" 19' du signal de sortie du circuit "Gardner" 19". Cette différence est intégrée par l'intégrateur 25 qui, à sa sortie, fournit le signal d'estimation de différence temporelle $\Delta 1$ ou $\Delta 2$, selon la configuration (Fig.2 ou Fig.3).

Le procédé de la présente invention est appliqué avant la mise en opération d'un système comprenant les filtres analogiques 5', 5", 10' et 10", notamment pendant le test des cartes comprenant les filtres analogiques 5', 5", 10' et 10". Le croisement des voies pour l'étape -b- est effectué entre les mélangeurs du démodulateur de phase en quadrature 8 et les filtres analogiques 10' et 10". Il s'agit donc de réalisation de liaisons physiques.

Le soustracteur 24 et l'intégrateur 25 du circuit d'estimation de différence 23, qui ne font pas partie du circuit de récupération d'horloge 14, peuvent être physiquement présents dans le récepteur, c'est à dire intégrés dans le récepteur, ou alternativement être connectables à celui-ci.

Le procédé de la présente invention peut être utilisé pour des systèmes de transmission permettant des débits différents. Dans ce cas, la compensation des différences en temps de propagation de groupe est optimale lorsque les étapes du procédé précédemment décrit sont effectuées au débit symbolique le plus élevé, là où les différences en temps de propagation de groupe sont le plus gênantes.

Un système de transmission de signaux en quadrature de phase selon la présente invention est identique à celui des figures 1A et 1B, avec les filtres 3', 3", 12' et 12" constitués par des filtres non adaptatifs. Ils ont par exemple des caractéristiques en racine carrée de Nyquist et sont de préférence des filtres à réponse impulsionnelle finie (FIR dans la littérature anglaise).

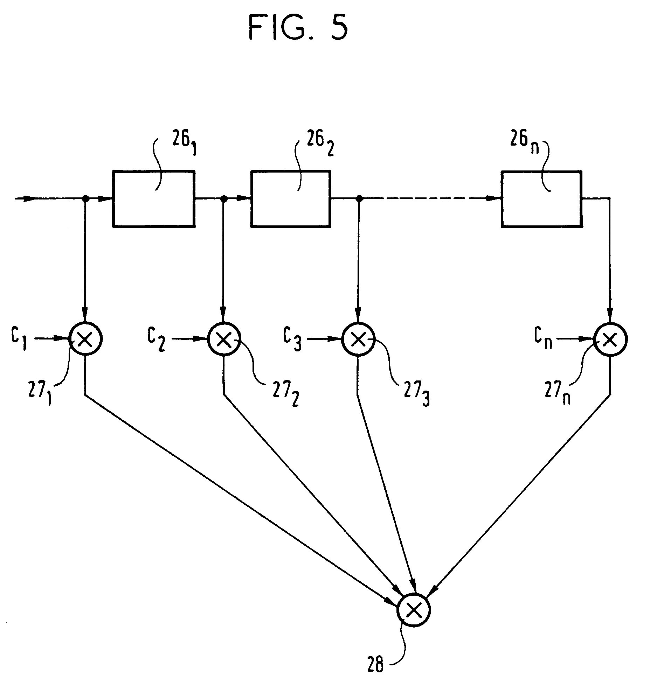

La figure 5 montre un tel filtre à réponse impulsionnelle finie. Il consiste en une pluralité de circuits de retard $26_1$, $26_2$,..., $26_n$ montés en cascade. Les signaux fournis par les circuits de retard sont chacun multipliés par un coefficient c1, c2,..., cn par des multiplieurs $27_1$, $27_2$,...,$27_n$ et les produits de ces multiplications sont sommés dans un additionneur 28 fournissant le signal numérique filtré de sortie. Les coefficients $c_1$, $c_2$,..., $c_n$ d'un des filtres numériques 3' (ou 12') diffèrent de ceux de l'autre filtre 3" (ou 12") de telle manière que les différences de temps de propagation de groupe sont compensées.

Différentes techniques de réglage des filtres numériques peuvent être mises en oeuvre : il est par exemple possible de calculer pour chaque émetteur et chaque récepteur à régler les coefficients $c_i$ à l'aide d'un microprocesseur recevant les différences $\Delta 1$ et $\Delta 2$. Ce microprocesseur calcule les valeurs Tx-Ty et Rx-Ry. En considérant en premier lieu que ce sont les filtres numériques de l'émetteur qui sont corrigés, la différence temporelle Tx-Ty, appelée $\Delta T$ est divisée par Ts qui est le temps symbole. Le résultat de cette division est une grandeur dont la valeur commande la modification des coefficients du filtre numérique.

A titre d'exemple, pour un temps $\Delta T$ égal à 250 ns et pour Ts valant 1 $\mu$s, $\Delta T/Ts$ vaut 0,25. Si les coefficients des filtres numériques 3' et 3" sont calculés pour des temps (avant correction) $t_{-3}$, $t_{-2}$, $t_{-1}$, $t_0$, $t_{+1}$, $t_{+2}$ et $t_{+3}$ (filtres à sept coefficents), l'un de ces filtres gardera ces coefficients, l'autre filtre recevant des coefficients calculés pour les temps $t_{-3,25}$, $t_{-2,25}$, $t_{-1,25}$, $t_{0,25}$, $t_{+0,75}$, $t_{+1,75}$ et $t_{+2,75}$. Il est également possible de corriger les coefficients des deux filtres numériques, par exemple en corrigeant de $+\Delta T/2Ts$ les coefficients de l'un des filtres et de $-\Delta T/2Ts$ les coefficients de l'autre de ces filtres.

L'essentiel est donc que les coefficients de l'un des filtres diffèrent après correction des coefficients de l'autre filtre calculés à une différence temporelle $\Delta T/Ts$.

Le même raisonnement s'applique ensuite aux filtres numériques 12' et 12" du récepteur en prenant en compte une différence Rx-Ry, appelée $\Delta Y$.

Une autre solution de réglage est de constituer en mémoire une banque d'une pluralité de coefficients types $ct_i$ correspondant à une pluralité de différences $\Delta 1_i$ et $\Delta 2_i$ prédéterminées. En fonction des mesures $\Delta 1$ et $\Delta 2$ effectuées sur un jeu d'un émetteur et d'un récepteur, on applique aux filtres 3', 3", 12' et 12" les coefficients $ct_i$ correspondant aux différences $\Delta 1_i$ et $\Delta 2_i$ les plus proches de $\Delta 1$ et $\Delta 2$ mesurés. Le nombre de coefficients types $ct_i$ est par exemple égal à 20.

Les filtres numériques utilisés dans l'invention sont par exemple des filtres en racine carrée de Nyquist dont la réponse impulsionnelle aux instants choisis par l'échantillonneur prend une valeur donnée par l'équation :

$$h(t) = 4.\beta.\frac{\cos\{(1+\beta).\pi.t/Ts\}+\sin\{(1-\beta).\pi.t/Ts\}.(4\beta.t/Ts)^{-1}}{(\pi.Ts^{1/2}).\{(4\beta.t/Ts)^{2}-1\}}$$

avec $\beta$ étant la valeur du facteur de roll-off désiré et t désignant la valeur des instants où on veut échantillonner la réponse impulsionnelle.

**Revendications**

1. Procédé de compensation des différences en temps de propagation de groupe entre les filtres analogiques (5', 5") d'un émetteur de signaux en quadrature de phase et entre les filtres analogiques (10', 10") d'un récepteur de signaux en quadrature de phase,
   ledit émetteur comprenant un modulateur de signaux en quadrature de phase (6) fournissant un signal de transmission (ST) à partir d'un premier et d'un deuxième signal en bande de base issus d'une première et d'une deuxième voie de traitement (2', 2"), lesdites première et deuxième voies de traitement (2', 2") comprenant respectivement un premier et un deuxième filtre d'émission analogique (5', 5"),
   ledit récepteur comprenant un démodulateur de signaux en quadrature de phase (8) qui, à partir du signal reçu (SR), fournit un troisième et un quatrième signal en bande de base à respectivement une troisième et à une quatrième voie de traitement (9', 9"), lesdites troisième et quatrième voies de traitement (9', 9") comprenant respectivement un troisième et un quatrième filtre de réception analogique (10', 10") fournissant respectivement un troisième signal filtré X et un quatrième signal filtré Y, ledit récepteur comprenant en outre un circuit de récupération d'horloge (14) fournissant un signal d'horloge à partir desdits troisième et quatrième signaux filtrés X respectivement Y,
   caractérisé en ce qu'il consiste à :

   a - appliquer ledit premier et ledit deuxième signal à respectivement ledit troisième et quatrième filtre analogique (10', 10"), les signaux de sortie desdits troisième et quatrième filtres analogiques (10', 10") constituant respectivement des signaux X1 et Y1 appliqués à un moyen d'estimation de la différence temporelle (23) fournissant une différence :

   $$\Delta 1 = (Tx + Rx) - (Ty + Ry)$$

   avec Tx, Rx, Ty et Ry étant respectivement les temps de propagation de signaux dans ledit premier, deuxième, troisième et quatrième filtres (5', 5", 10', 10"), ladite différence $\Delta 1$ étant représentative de la différence temporelle entre les instants de pointage optimaux entre lesdits signaux X1 et Y1,
   b - appliquer ledit premier et ledit deuxième signal à respectivement ledit quatrième et troisième filtre analogique (10", 10'), les signaux de sortie desdits troisième et quatrième filtres analogiques (10', 10") constituant respectivement des signaux X2 et Y2 appliqués audit moyen d'estimation de la différence temporelle (23) fournissant une différence :

   $$\Delta 2 = (Ty + Rx) - (Tx + Ry)$$

   ladite différence $\Delta 2$ étant représentative de la différence temporelle entre les instants de pointage optimaux entre lesdits signaux X2 et Y2,
   c - déterminer, à partir desdites différences $\Delta 1$ et $\Delta 2$, des coefficients de pondération (c1, c2,...,cn) appliqués à des cinquième, sixième, septième et huitième filtres numériques (3', 3", 12', 12") insérés dans lesdites première, deuxième, troisième et quatrième voies de traitement (2', 2", 9', 9"), lesdits filtres numériques (3', 3", 12', 12") étant inopérants pendant lesdites étapes -a- et -b-, de manière à compenser lesdites différences en temps de propagation de groupe d'une part entre lesdits premier et deuxième filtres analogiques (5', 5") et d'autre part entre lesdits troisième et quatrième filtres analogiques (10', 10").

2. Procédé selon la revendication 1, caractérisé en ce que le débit symbolique dudit premier et dudit deuxième signal est le débit symbolique le plus élevé qui peut être supporté par un système de transmission comprenant ledit émetteur et ledit récepteur.

3. Dispositif d'estimation des différences $\Delta 1$ et $\Delta 2$ selon l'une des revendications 1 ou 2, caractérisé en ce qu'il consiste en :

   - un premier et un deuxième circuit de type Gardner (19', 19") recevant respectivement lesdits troisième et quatrième signaux filtrés X et Y, lesdits circuits de type Gardner (19', 19") servant également de circuit de récupération d'horloge (14),

- un soustracteur (24) soustrayant le signal fourni par le deuxième circuit de type Gardner (19") du signal fourni par le premier circuit de type Gardner (19'), et
- un intégrateur (25) intégrant le signal fourni par ledit soustracteur (24) pour produire lesdites différences $\Delta 1$ et $\Delta 2$.

4. Dispositif selon la revendication 3, caractérisé en ce que lesdits circuits de type Gardner (19', 19") comprennent chacun un premier circuit de retard (15',15") recevant un signal d'entrée (X, Y), la sortie dudit premier circuit de retard (15', 15") étant connectée à l'entrée d'un deuxième circuit de retard (16', 16"), un soustracteur (17', 17") soustrayant le signal entrant dans ledit premier circuit de retard (15', 15") du signal fourni par ledit deuxième circuit de retard (16', 16") et un multiplicateur (18', 18") multipliant le signal fourni par ledit premier circuit de retard (15', 15") par le signal fourni par ledit soustracteur (17', 17").

5. Dispositif selon la revendication 4, caractérisé en ce que le retard desdits circuit de retard (15', 15", 16', 16") a une valeur de Ts/2, Ts étant la période symbole.

6. Dispositif selon l'une des revendications 3 à 5, caractérisé en ce que ledit soustracteur (24) et ledit intégrateur (25) dudit circuit d'estimation desdites différences $\Delta 1$ et $\Delta 2$ (23) sont intégrés dans ledit récepteur.

7. Système de transmission de signaux en quadrature comprenant lesdits cinquième, sixième, septième et huitième filtres numériques (3', 3", 12', 12") insérés dans lesdites première, deuxième, troisième et quatrième voies (2', 2", 9', 9") compensant des différences en temps de propagation de groupe entre lesdits filtres analogiques (5', 5") dudit émetteur de signaux en quadrature de phase et entre les filtres analogiques (10', 10") dudit récepteur de signaux en quadrature de phase selon l'une des revendications 1 à 5, caractérisé en ce que lesdits filtres numériques sont des filtres à réponse impulsionnelle finie.

# FIG. 1A

# FIG. 1B

# FIG. 2

X → [ 5' ] → [ 10' ] → [ 11' ] →X1 [ 23 ] → Δ1

Y → [ 5'' ] → [ 10'' ] → [ 11'' ] →Y1

# FIG. 3

X → [ 5' ] → [ 10' ] → [ 11' ] →X2 [ 23 ] → Δ2

Y → [ 5'' ] → [ 10'' ] → [ 11'' ] →Y2

# FIG. 4

# FIG. 5

Office européen
des brevets

**RAPPORT DE RECHERCHE EUROPEENNE**

Numero de la demande

EP 96 83 0037

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-4 805 189 (MAHONEY ) 14 Février 1989<br>* abrégé; figure 3 *<br>* colonne 7, ligne 21 - ligne 39 *<br>--- | 1-7 | H04L25/03 |
| A | US-A-5 065 107 (KUMAR & HARRON) 12 Novembre 1991<br>* colonne 2, ligne 56 - ligne 60; figure 1 *<br><br>--- | 1,7 | |
| A | US-A-5 075 774 (GIBSON & JONNALAGADDA) 24 Décembre 1991<br>* colonne 3, ligne 35 - ligne 43 *<br>--- | 1,7 | |
| A | US-A-5 394 439 (HEMMATI) 28 Février 1995<br>* colonne 5, ligne 65 - colonne 6, ligne 4 *<br><br>--- | 1,7 | |
| A | IEEE TRANSACTIONS ON COMMUNICATIONS, vol. 33, no. 5, Mai 1985, NEW YORK US, pages 487-491, XP002007349 KUANG-TSAN WU & FEHER: "256-QAM modem performance in distorted channels"<br>* abrégé *<br>--- | 1,7 | **DOMAINES TECHNIQUES RECHERCHES (Int.Cl.6)**<br><br>H04L |
| A | WO-A-94 16506 (ELECTRONIC DECISIONS) 21 Juillet 1994<br>* page 25, ligne 20 - page 27, ligne 13; figure 5 *<br>--- | 1,7 | |
| A | EP-A-0 656 713 (MATSUSHITA) 7 Juin 1995<br>* figure 2 *<br>--- | 1 | |
| A,D | IEEE TRANSACTIONS ON COMMUNICATIONS, vol. 34, no. 5, Mai 1986, NEW YORK US, pages 423-429, XP002007350 GARDNER: "A BPSK/QPSK timing-error detector for sampled receivers"<br>* abrégé *<br>----- | 3 | |

Le présent rapport a été établi pour toutes les revendications

| Lieu de la recherche | Date d'achèvement de la recherche | Examinateur |
|---|---|---|
| LA HAYE | 3 Juillet 1996 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.............................................................................
& : membre de la même famille, document correspondant

EPO FORM 1503 03.82 (P04C02)